# EUROPEAN PATENT SPECIFICATION

(11) **EP 0 385 541 B1**
(45) Date of publication and mention of the grant of the patent: **27.04.1994**
(21) Application number: 90200425.8
(22) Date of filing: 23.02.1990
(51) Int. Cl.: A23C 15/16, A23D 7/00

(54) **Butter containing spread and process for preparation thereof**
Brotaufstrich mit Butter und Verfahren zu seiner Herstellung
Pâte à tartiner comprenant du beurre et procédé de préparation

(30) Priority: 03.03.1989 GB 8904942; 13.11.1989 GB 8925624
(43) Date of publication of application: 05.09.1990
(73) Proprietor: UNILEVER N.V., 3013 AL Rotterdam (NL); UNILEVER PLC, London EC4P 4BQ (GB)
(72) Inventor: Cain, Frederick William, NL-2271 VL Voorburg (NL); Ernsting, Peter Bernard, NL-2628 LC Delft (NL); Holemans, Pieter Maria Jozef, B-2080 Kapellen (BE); Niemeyer, Tjaard Robert Jan, NL-3136 SC Vlaardingen (NL)
(74) Representative: Mulder, Cornelis Willem Reinier, Dr.

(56) References cited:
- EP-A- 0 062 938
- EP-A- 0 340 857
- AU-A- 482 193
- DE-A- 3 435 269
- GB-A- 1 598 362

## Description

The present invention relates to a butter-containing spread, and a process for the production of the said spread.

For convenience the present specification uses the term "butter-like spread" to refer to a plastic edible dispersion other than butter which exhibits butter-like properties.

Creams are emulsions of the oil-in-water type, and are well known both as starting materials and intermediates in methods for the production of butters and spreads. In such methods the dispersed fat phase of the cream is converted by phase-inversion into a continuous part-crystallised fat phase in which a dispersed aqueous phase is present. With dairy cream, particularly in conventional butter-making, this has been accomplished by the well-established method of cooling and working a 40%wt butter-fat cream in a churn. During churning partial phase separation occurs with loss of much of the aqueous phase as buttermilk and a concentration of the fat phase as the butter mass.

Churned butter has desirable mechanical properties as regards spreadability and elasticity over a relatively narrow range of temperatures, and much research has concerned how this range can be extended. On the one hand work the addition of additional aqueous phase to butter has produced low-calorie spreads with greater ease of spreading than butter. On the other hand the addition of relatively fluid oils and fats to butter-fat has reduced the overall hardness of high-fat (80%) spreads prepared with the resulting blend.

A general difficulty with low-calorie spreads and with soft, high-fat spreads is that the spreads are organoleptically inferior to butter. Research to determine the factors which allow the consumer to distinguish traditional butter from spreads, has only met with limited success.

In such comparative tests experienced tasters are provided with samples of butter and samples of a number of spreads, and asked to indicate the preferred product in a number of blind pair-comparisons. Analysis of the preferences reveals whether or not the spreads exhibit a significant butter likeness. While some spreads score better than others, those with an improvement in refrigerator spreadability are often significantly less preferred to butter.

We have identified a method for the production of both low calorie and reduced fat spreads which yields a product for which the organoleptic preference scores are such that the product is not significantly less preferable to butter.

According to the invention an edible water-in-oil emulsion comprising 30-70%wt of an aqueous phase and butter fat is provided, which butterfat only originates from cream which has not at any time become anhydrous and having a fat content in excess of 40%wt and a dry olein fraction of butter fat in a weight ratio of 1:10 to 10:1.
The invention also provides a process for the preparation of such edible emulsion, which process comprises the steps of
a) admixing a butter fat component and a non-dairy aqueous phase, optionally including therein a thickener and
b) working the product of step a) under conditions of sufficiently high shear that a stable edible water-in-oil emulsion with essentially the same composition as the product of step a) results,
which process is characterized in admixing dairy cream which has not at any time become anhydrous and having a fat content in excess of 40%wt. and dry butter olein in a weight ratio of 1:10 to 10:1 as butter fat component.

In the prior art as requested by DE-A-3435269 it is known to use a great variety of fat sources in the manufacture of reduced fat spreads including butter, cream, concentrated cream and butter olein and concentrated cream.
GB-A-1 598 362 suggests using fat or oil derived from full fat milk such as butter oil, cream or any combination thereof with or without vegetable oil. No mention or suggestion about dry olein butter oil fraction or concentrated cream can be found.
EP-A-340 857 refers to a spreadable oil in water emulsion which may comprise concentrated or unconcentrated or dried milk, cream, butter, anhydrous milk fat or mixtures thereof. Not the slightest suggestion or inducement for using both concentrated cream and dry butter olien can be derived from this disclosure.
AU-A-482 193 discloses butter ahving a usual fat content of about 80%. For reducing the well-known hardness of the butter an amount of soft oil, e.g. vegetable oil or a soft fraction of butter oil is added.

It is believed that the advantage of using both concentrated cream and dry butter olein according to the invention stems from the difference in the organoleptic properties of these two components.

It is observed that the wet-concentrated butter-fat has not at any time become anhydrous, and it is believed that this has an effect on the flavour and other organoleptic properties of the products according to the present invention.

By using concentrated cream it is envisaged that a greater proportion of the cream globule phospholipids and other components of the lactating membrane survive the manufacturing process and promote a "creamy" organoleptic impression on consumption.

Typically, the wet-concentrated butter-fat has a butterfat triglyceride content of at least 60%wt. In some embodiments of the invention such concentrates comprise a concentrated cream comprising between 60 and 70%wt fat. Such a cream can be obtained by the separation of a lactose-rich fraction from milk or cream. Such as by concentration of milk in a cream separator by known methods. The skim-milk which can be put to a variety of uses. If a cream with a butter-fat content of over 70% is employed the high viscosity of the cream makes it somewhat difficult to handle, however it has been determined that creams can be concentrated in a cream separator to well above 90% fat. Should facilities for cream concentration be unavailable, concentrated cream is available in the marketplace.

For the purposes of the present specification the term dry-butterfat is intended to embrace butter-fats which have been rendered anhydrous at some time during the concentration process. The dry butterfat component contributes a different set of flavour components to the product. It is believed that rendering the butterfat anhydrous causes the formation of flavour components which are not present in fresh dairy butter or cream.

The use of dry butter olein softens the eventual product. While this is not strictly necessary in the formation of the low or reduced fat spreads according to the present invention it is preferable that the fat phase viscosity should be lowered towards the viscosity of the water-phase.

Additionally, by use of a butter olein it is possible to ensure that a major part of the flavour components naturally present in butter are present in the product, as these flavour components are preferentially recovered in the olein rather that the stearin upon fractionation of butterfat.

Preferably the olein fraction is one having a melting point less than 20°C, more preferably less than 15°C and most preferably less than 10°C.

Butter olein may be fractionated from butter-fat by any suitable method, many of which are given in the available literature. As with the cream, should facilities for the preparation of butter and extraction of the olein be unavailable, both of these commodities are available in the marketplace.

In addition to the flavour aspect of the butter olein, we have determined that the use of such a low-melting fat enables the amount of thickener to be reduced. It is believed that products have particularly favorable mouthfeel when the viscosity of the aqueous phase approximates to that of the fat phase. Thus, by using a lower-melting fat phase it is possible to match the viscosity of the water phase to that of the fat phase in the water phase in the presence of a lesser amount of thickener. This is important in the presence of thickeners such as gelatine which may have, or with time, develop an off-taste at higher concentrations.

Preferred emulsions according to the present invention comprise 30-50%wt fatty phase and 70-50% aqueous phase. More preferably, these emulsions comprise butterfat, butter olein and a non-dairy aqueous phase.

The method for preparation of these emulsions comprises the steps of;
a) admixing butter, butter olein and a non-dairy aqueous phase to form a premix, and,
b) working the pre-mix under conditions of sufficiently high shear that a stable edible water in oil emulsion with the essentially the same composition as the premix results.

Introducing into the pre-mix a quantity of non-dairy aqueous phase not only enables the final fat content of the spread to be reduced, but also enables the final inorganic salt content of the product, final pH and the final lactose content of the product to be controlled. In preferred embodiments of the invention the final pH is less than 5.5 and the final lactose content is below 2%. The aqueous phase of the final product is subject to significant variation and may comprise thickeners and/or emulsifiers.

It should be noted that in this specification the term "non-dairy", when used to describe the added aqueous phase, refers generally to those water phases having a relatively low content of lactose. The presence of other dairy substances in the water phase, such as caseinate, is optional. The presence of thickeners or gelling agents in the water phase is particularly preferred where the fat phase content is less than 65% of the eventual product, suitable thickeners and gelling agents include gelatine, locust bean gum, guar gum, xanthan gum, milk proteins, alginates, carrageenans, pectins.

The proportion of concentrated dairy cream, butter-olein and added aqueous phase present in the pre-mix are capable of considerable variation at a fixed fat level. It has been known for many years that the consistency of traditional dairy butter varies throughout the year and that this follows dietary and seasonal variations in the tri-glyceride content of dairy cream. It is however possible to overcome the effect of these variations on product properties by selecting the ratio of cream to butter olein and/or the type of butter olein used, so as to obtain an "N-line" within a predetermined range.

While this N-line may be achieved merely by the use of dairy ingredients as defined above, it is believed possible to add minor proportions of vegetable oil either to fine tune the N-line or to replace a portion of the expensive butterfat. Excellent product properties were obtained when the N-values fell within the range N10:- 30-45, N20:- 5-15, N30:- 0-5.

Before cooling and working, emulsifiers, colouring agents and flavours may be added to the premix. It has been determined that these are optional at high fat levels as the dairy cream and/or the butter olein contain enough natural emulsifiers and flavours to give a good product without the need for these components to be introduced as additives, and the colour of the product is acceptable. At moderate fat levels, (around 60% fat on product) the contribution of the butter olein to flavour is still marked, but at lower fat levels (approaching 40%) addition of flavour becomes desirable. Where emulsifiers and colouring agents are added it has been found convenient to add these to the butter olein used in the preparation of the premix.

In the preffered embodiments of the present invention care should be taken that the pre-mix entering the phase inversion stage of the process has not at any time been subjected to conditions of prolonged high shear, that is if as much of the cooling, and preferably all, is done in static heat exchangers, the olein and whole butterfat or cream globules present in the pre-mix have not been combined to yield a uniform distribution of tri-glyceride types over the droplets present. It is believed that the presence of droplets of olein in the process flow at this stage facilitates the phase inversion step. It is also observed that, especially in the cream, any inhomogeneity in the distribution of differing tri-glyceride types between the original droplets of the cream has not been markedly effected by the process.

As mentioned above cooling of the pre-mix is preferably carried out in a apparatus which does not expose the throughput to conditions of prolonged moderate or high shear. However, it may prove necessary to expose the premix to a sufficient shear to maintain an emulsion structure, as the pre-mix is in a meta-stable physical state. This is especially true where the pre-mix is prepared in a batch-wise manner, as illustrated below by way of example.

It is preferable to operate the method of the invention as a semi-continuous process, wherein the pre-mix is prepared batchwise and product is prepared continuously from the contents of several pre-mix tanks. We have determined that the method may be realised by the use of cooling coils to accomplish cooling of the premix followed by inversion in a so-called "C-unit" to form a product. The absence of scraped surface heat-exchangers in this processing apparatus greatly simplifies the plant required, as it is no-longer necessary to provide a supply of liquid ammonia to cool these units.

Nevertheless, it is also possible to prepare products according to the present invention on conventional spread production lines.

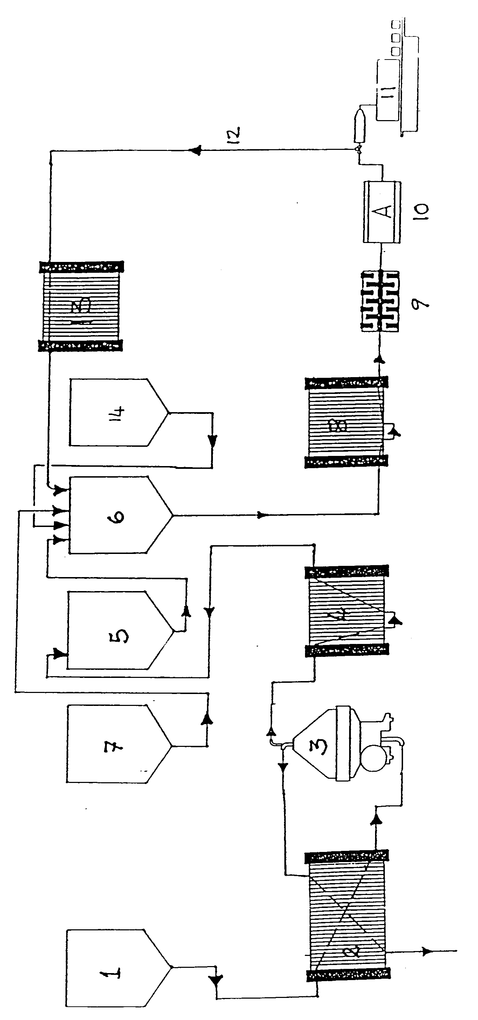

In order that the invention may be further understood, the following example is given by way of illustration of the process and the products obtained thereby. The example refers to the accompanying figure, which is a schematic representation of a process line by means of which the present invention may be applied.

The plant comprises cream storage tank (1), supplying 40% dairy cream to heat-exchanger (2), which in turn feeds cooled cream to cream-separating centrifuge (3). During centrifugation, an aqueous fraction of the cream is removed and the retentate concentrated to a fat phase content of 50-70%. After concentration the cream is passed to a further heat-exchanger (4), in which it is Pasteurised before being fed to storage tank (5), where it is held at 60°C prior to further processing. It should be noted that concentrated dairy cream with a 50-70% fat content is available in the marketplace.

Separately from the preparation of the concentrated dairy cream, a butter olein fraction is prepared, suitably by a known method. In the present embodiment of the invention a butter olein fraction obtained by dry-fractionation at a temperature of 15°C was employed. As with the concentrated dairy cream, such materials are available in the marketplace. A water-in-oil promoting monoglyceride emulsifier and the colour were dispersed in the butter olein after heating the butter olein to temperature of 60°C. The resulting butter olein containing mix is held in storage tank (14).

From tanks (5) and (14) the contents are discharged into the pre-mix tank (6), again held at 60°C. The emulsion was maintained without breaking by stirring. Flavour components were added to the contents of the pre-mix tank.

Separately from the production of the above pre-mix, a waterphase was prepared in water-phase tank 7, by dissolving salt, potassium sorbate and gelatine in water at a temperature of 60°C. A high quality food-grade gelatine was employed ex. Extracto Sweden.

The above-mentioned waterphase was discharged into the pre-mix tank and admixed with the pre-mix prepared according to the preceding steps. The pH of the contents of the pre-mix tank was adjusted to pH 5.01 with lactic acid.

The final composition of the contents of the pre-mix tank (6) was;

| | |
|---|---|
| 55% Cream | 43.6% |
| Butter Olein | 16.6% |
| Monoglyceride | 0.1% {emulsifier} |
| Colour | 0.04% |
| Gelatine | 2.5% {thickener} |
| Salt | 0.2% {preservative/taste} |
| K-sorbate | 0.1% {preservative} |
| Lactic acid | to pH 5.0 |
| Water | to 100% |

From the premix tank (6), the premix is pumped into a chiller (8), where it is cooled to an outlet temperature of 13°C.

The premix emerging from the chiller (8) is fed to a C-unit (9) with an outlet temperature of 21°C and thereafter to an A-unit (10) with an outlet temperature of 14°C, at which temperature it is packed.

In order to accommodate break-downs in the packaging apparatus (11), a rework line (12) enabled selective recirculation of the inverted emulsion through a further heat-exchanger (13) to the premix tank (6).

Typical hardness values for the product were obtained according to the method of Haighton et al (J.A.O.C.S 36, 1959, p345) as C-values at the indicated temperatures;

| | |
|---|---|
| 5 Celsius | 1500-2000 |
| 10 Celsius | 950-1300 |
| 15 Celsius | 350-450 |
| 20 Celsius | 80-150 |

Typical N-values for the fat phase used in this example are N10:- 39.6, N15:- 21.0, N20:- 8.5, N25:- 3.8, N30:-0.7 and N35:- 0.0.

## Claims

1. Edible water-in-oil emulsion spread comprising 30-70% wt of an aqueous phase and butter fat characterized in that the butterfat only originates from cream which has not at any time become anhydrous and having a fat content in excess of 40%wt and a dry olein fraction of butter fat in a weight ratio of 1:10 to 10:1.

2. Emulsion as claimed in claim 1 characterized in that the olein fraction has a melting point of less than 20°C, preferably less than 15°C and more preferably less than 10°C.

3. Emulsion as claimed in claim 1 or 2, characterized in that the cream has a fat content of at least 60%wt.

4. Emulsion as claimed in any one of claims 1-3, further comprising a gelling or thickening agent.

5. Emulsion as claimed in claim 4, wherein the gelling or thickening agent is selected from the group comprising milk protein, gelatin, locust bean gum, guar gum, xanthan gum, alginates, carrageenans, pectins and combinations of two or more of the same.

6. Emulsion as claimed in any one of claims 1-5 further comprising a non-milk fat.

7. Process for the preparation of an edible emulsion according to claim 1, which comprises the steps of a) admixing a butter fat component and a non-dairy aqueous phase, optionally including therein a thickener and b) working the product of step a) under conditions of sufficiently high shear that a stable edible water-in-oil emulsion with essentially the same composition as the product of step a) results, characterized in admixing dairy cream which has not at any time become anhydrous and having a fat content in excess of 40%wt. and dry butter olein in a weight ration of 1:10 to 10:1 as butter fat component.

## Patentansprüche

1. Eßbarer Wasser-in-Öl Emulsionsaufstrich, umfassend 30 bis 70 Gew.-% einer wässrigen Phase und Butterfett, dadurch gekennzeichnet, daß das Butterfett nur aus Rahm stammt, der zu keiner Zeit wasserfrei war und einen Fettgehalt über 40 Gew.-% und eine trockene Oleinfraktion des Butterfettes in einem Gewichtsverhältnis von 1:10 bis 10:1 besitzt.

2. Emulsion nach Anspruch 1, dadurch gekennzeichnet, daß die Oleinfraktion einen Schmelzpunkt von weniger als 20°C, vorzugsweise von weniger als 15°C und insbesondere von weniger als 10°C hat.

3. Emulsion nach den Ansprüchen 1 oder 2, dadurch gekennzeichnet, daß der Rahm einen Fettgehalt von mindestens 60 Gew.-% hat.

4. Emulsion nach einem der Ansprüche 1 bis 3, dadurch gekennzeichnet, daß sie ein Gelier- oder Verdickungsmittel umfaßt.

5. Emulsion nach Anspruch 4, dadurch gekennzeichnet, daß das Gelier- oder Verdickungsmittel ausgewählt ist aus der Gruppe, umfassend Milchprotein, Gelatine, Johannesbrotgummi, Guargummi, Xanthangummi, Alginate, Karrageenane, Pektine und Kombinationen von zwei oder mehreren dieser Stoffe.

6. Emulsion nach einem der Ansprüche 1 bis 5, die außerdem ein nicht auf Milch basierendes Fett enthält.

7. Verfahren für die Herstellung einer eßbaren Emulsion nach Anspruch 1, umfassend die Schritte a) Vermischung einer Butterfettkomponente und einer nicht auf Molkereiprodukten basierenden wässrigen Phase, wahlweise ein Verdickungsmittel beinhaltend, und b) Bearbeiten des Produktes des Schrittes a) unter Bedingungen einer hinreichend hohen Scherkraft, so daß eine stabile, eßbare Wasser-in-Öl-Emulsion mit im wesentlichen der gleichen Zusammensetzung wie das Produkt des Schrittes a) resultiert, dadurch gekennzeichnet, daß als Butterfettkomponente ein Molkereirahm zugemischt wird, der zu keiner Zeit wasserfrei war und einen Fettgehalt über 40 Gew.-% und trockenes Butterolein in einem Gewichtsverhältnis von 1:10 bis 10:1 besitzt.

## Revendications

1. Pâte à tartiner à émulsion comestible eau-dans-huile comprenant 30-70 % d'une phase aqueuse et de la graisse de beurre, caractérisée en ce que cette graisse de beurre provient uniquement de crème qui n'est jamais devenue anhydre et qui a une teneur en graisse supérieure à 40 % en poids et une teneur en oléine anhydre de graisse de beurre en proportion pondérale de 1:10 à 10:1.

2. Emulsion selon la revendication 1, caractérisée en ce que la fraction d'oléine a un point de fusion inférieur à 20°C, de préférence inférieur à 15°C et surtout inférieur à 10°C.

3. Emulsion selon la revendication 1 ou 2, caractérisée en ce que la crème a une teneur en graisse d'au moins 60 % en poids.

4. Emulsion selon l'une quelconque des revendications 1 à 3 qui comprend en outre un agent gélifiant ou épaississant.

5. Emulsion selon la revendication 4, dans laquelle l'agent gélifiant ou épaississant est choisi dans le groupe constitué de protéine de lait, gélatine, gomme de graine de robinier, gomme agar-agar, gomme zanthane, alginates, carraghénates, pectines et combinaison de deux ou plusieurs d'entre eux.

6. Emulsion selon l'une quelconque des revendications 1 à 5 qui comprend en outre une graisse non laitière.

7. Procédé de préparation d'une émulsion comestible, ce procédé comprend les étapes de (a) mélanger une composante graisse de beurre et une phase aqueuse non laitière, qui comprend éventuellement un épaississant et (b) traiter le produit de l'étape (a) dans des conditions de cisaillement suffisamment élevé pour produire une émulsion eau-dans-huile comestible stable qui a essentiellement la même composition que le produit de l'étape (a) caractérisé par l'adjonction de crème laitière qui n'est jamais devenue anhydre et ayant une teneur en graisse dépassant 40 % en poids et une teneur en oléine anhydre de beurre en proportion pondérale de 1:10 à 10:1 comme composant de graisse de beurre.
